# EUROPEAN PATENT APPLICATION

(11) **EP 1 041 479 A1**
(43) Date of publication of application: **04.10.2000**
(21) Application number: 00106643.0
(22) Date of filing: 28.03.2000
(51) Int. Cl.: G05F 3/00, G06F 11/00

(54) **Data processing apparatus and data processing method thereof**

(30) Priority: 29.03.1999 JP 8593199
(71) Applicant: NEC CORPORATION, Tokyo (JP)
(72) Inventor: Iwamoto, Makoto, c/o NEC IC Microcomputer Sys. Ltd, Kawasaki-shi, Kanagawa (JP)
(74) Representative: Baronetzky, Klaus, Dipl.-Ing.

(57) **Abstract**

A reference data having contents same as a processing data in data storing means 106 is written in reference storing means 201 as a data, and data comparison means 202 conducts data comparison between the reference data and the processing data, and thereby, if non-coincidence is determined, error occurrence is detected.

## Description

### BACKGROUND OF THE INVENTION

The present invention relates to a data processing apparatus in which operation executing means executes a processing operation using a stored data in data storing means, and a data processing method thereof.

Presently, several kinds of data processing apparatuses are utilized for several kinds of data processing, and such data processing apparatuses are formed in several kinds of forms in accordance with required performance and working environment. For example, in case that a data processing apparatus formed of an IC (Integrated Circuit) is utilized for specific application, it is general to incorporate a peculiar circuit apparatus therein as an ASIC (Application Specific IC).

For example, as such a circuit apparatus, although there is a data processing apparatus in which an analog circuit such as a band gap circuit is incorporated, since generally characteristic of the analog circuit drastically varies due to an manufacturing error, the characteristic of the analog circuit is adjusted by digital circuit after completion of a bare chip.

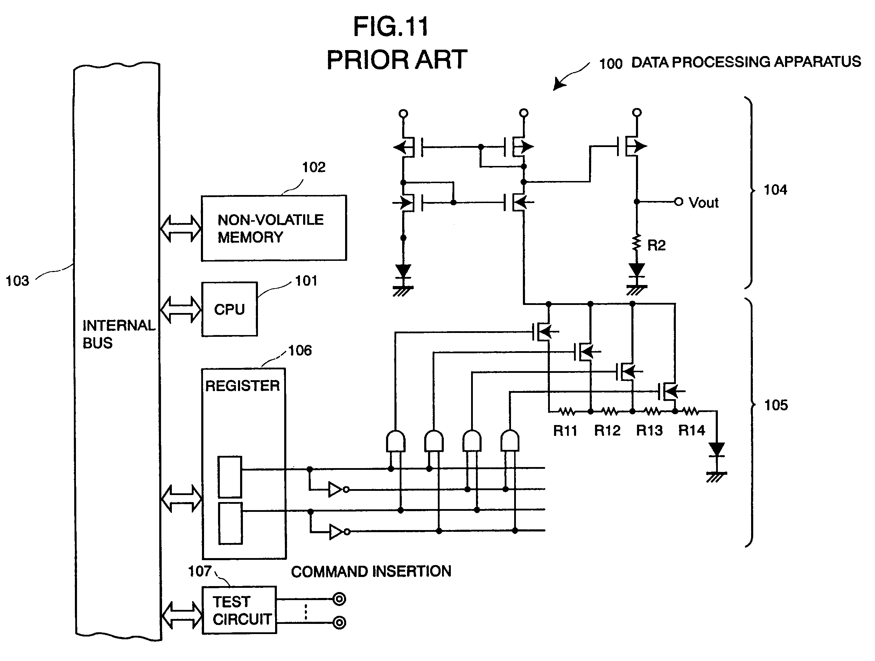

One conventional example of such a data processing apparatus will be explained by referring to Fig. 11. In addition, the figure is a block diagram showing an internal structure of one conventional example of a data processing apparatus. A conventional data processing apparatus 100 illustrated here includes a CPU (Central Processing Unit) 101 and a non-volatile memory 102, and these are connected to an internal bus 103.

The data processing apparatus 100 illustrated here is actually a part of a microcomputer (not shown), and this microcomputer shares the data processing apparatus 100 and the CPU 101. A ROM (Read Only Memory), a RAM (Random Access Memory) and so forth which are located outside of the data processing apparatus 100 are connected to this CPU 101 (not shown), and the microcomputer is formed by this ROM, the RAM and the CPU 101.

In this microcomputer, a proper control program is mounted in the ROM and so forth in advance as a software and a firmware, and by means of several kinds of data processing of the CPU 101, which corresponds to this control program, each section of the data processing apparatus 100 and so forth are integratedly controlled.

The non-volatile memory 102 of this data processing apparatus 100 is formed by a non-volatile information storage medium such as a flash memory, an EEPROM (Electrically Erasable Programmable ROM) and an FeRAM (Ferroelectric RAM), and rewritably conducts data storage of several kinds of data.

Furthermore, this data processing apparatus 100 includes a band gap circuit 104 as an analog circuit, and a trimming circuit 105 corresponding to operation executing means is connected to this band gap circuit 104. A register circuit 106 that is data storing means is connected to this trimming circuit 105, and this register circuit 106 is connected to the internal bus 103 together with a test circuit 107.

The register circuit 106 is formed of an FF (Flip Flop) array that is an information storage medium for rewritably conducting data storage of several kinds of data, and a predetermined processing data is written therein as a data in advance by means of the test circuit 107. The band gap circuit 104 generates an output voltage of a predetermined value by means of an analog operation, and the trimming circuit 105 adjusts a voltage value of an output voltage of the band gap circuit 104 in accordance with a processing data written in the register circuit 106 as a data.

As mentioned above, since the data processing apparatus 100 having a structure built in the microcomputer generates an output voltage of a predetermined value by means of the band gap circuit 104 that is an analog circuit and supplies it to each section of the microcomputer, this microcomputer operates by means of the output voltage supplied from the data processing apparatus 100, and executes several kinds of digital processing.

Although the data processing apparatus 100 is formed of a semiconductor integrated circuit, the band gap circuit 104 that is incorporated in the inside thereof is an analog circuit, and accordingly, characteristic thereof drastically varies due to a manufacturing error of a thin film technology. However, the register circuit 106 is connected to the band gap circuit 104 through the trimming circuit 105, and a proper processing data is written in this register circuit 106 as a data in advance.

Since the trimming circuit 105 adjusts operation characteristic of the band gap circuit 104 in accordance with the processing data of this register circuit 106, the band gap circuit 104 can stably generate an output voltage of a proper value, and the data processing apparatus 100 can normally operate.

In addition, in case of actually manufacturing a microcomputer in which the data processing apparatus 100 is built, a microcomputer that is completed for example as an LSI (Large Scale Integration) chip is mounted on an LSI test device (not shown), and a connection terminal thereof is connected to the band gap circuit 104 and the test circuit 107 of the data processing apparatus 100.

Since, under such condition, the LSI test device confirms a voltage value of an output voltage of the band gap circuit 104 while successively changing a stored data of the register circuit 106 by means of the test circuit 107, a processing data in which this voltage value approximates an ideal value will be written in the register circuit 106 as a data.

In this manner, when the microcomputer in which a proper processing data is written as a data in the register circuit 106 of the data processing apparatus 100 is shipped for a user side from a maker side as a bare chip, on the user side, it is possible to incorporate the microcomputer of the bare chip into an electronic instrument.

In the above-mentioned data processing apparatus 100, since the trimming circuit 105 adjusts analog operation of the band gap circuit 104 in accordance with a digital processing data which is written in the register circuit 106 as a data, this band gap circuit 104 can stably generate an output voltage of a proper value.

However, as mentioned before, even though the maker side ships for a user side the microcomputer in which a proper processing data is written as a data in the register circuit 106 of the data processing apparatus 100, disappearance or abnormality of a processing data in the register circuit 106 sometimes occurs due to use condition or storage condition.

In this case, since a voltage value of an output voltage generated by the band gap circuit 104 that is an analog circuit varies from a proper range, an erroneous operation or runaway in the operation of the microcomputer in which the data processing apparatus 100 is built sometimes occurs, and for example, an instrument in which the microcomputer is used sometimes falls into fatal condition.

### SUMMARY OF THE INVENTION

The present invention is made to solve the above-mentioned problems.

Moreover, the objective of the invention is to provide a data processing apparatus capable of precisely detecting the occurrence of inferiority of a storage data in data storing means, and a data processing method thereof.

One data processing apparatus of the present invention includes data storing means formed of an information storage medium for rewritably conducting data storage of various kinds of data, in which data writing of a predetermined processing data is conducted in advance, operation executing means for conducting data reading of the processing data from the above-described data storing means, and executing a predetermined operation, reference storing means in which data writing of a reference data having contents same as the above-described processing data is conducted in advance, data comparison means for conducting data reading of the reference data from the above-described reference storing means and conducting data reading of the processing data from the above-described data storing means, and conducting data comparison, and error detecting means for detecting error occurrence if the above-described data comparison means determines non-coincidence between the reference data and the processing data.

Accordingly, in a data processing method in accordance with the data processing apparatus of the present invention, the operation executing means conducts data reading of the predetermined processing data which is written in advance as a data in the data storing means for rewritably conducting data storage of various kinds of data, and executes the predetermined operation. However, the reference data having contents same as the processing data is written in advance as a data in the reference storing means, and the data comparison means conducts data reading of the reference data of this reference storing means and the processing data of the data storing means, and conducts data comparison. Thereby, since the error detecting means detects error occurrence when non-coincidence between the reference data and the processing data is determined, storage inferiority which occurs in the data storing means is detected as error occurrence.

In the above-mentioned data processing apparatus, the above-described reference storing means can be formed of an information storage medium, of which holding characteristic of a stored data is different from that of the above-described data storing means. In this case, since the holding characteristics of a stored data are different from each other between the reference storing means and the data storing means, for example in case that the holding characteristic of the reference storing means is better than that of the data storing means, error occurrence is detected when storage inferiority occurs in the data storing means, and in case that the holding characteristic of the reference storing means is not better than that of the data storing means, error occurrence is detected before storage inferiority occurs in the data storing means and when storage inferiority occurs in the reference storing means.

Other data processing apparatus of the present invention includes data storing means formed of an information storage medium for rewritably conducting data storage of various kinds of data, in which data writing of a predetermined processing data is conducted in advance, operation executing means for conducting data reading of the processing data from the above-described data storing means, and executing a predetermined operation, reference storing means formed of an information storage medium of which holding characteristic of a stored data is not better than the above-described data storing means, in which data writing of a predetermined reference data is conducted in advance, quality determining means for conducting data reading of the reference data from the above-described reference storing means, and determining whether or not there is inferiority, and error detecting means for detecting error occurrence if the above-described quality determining means determines inferiority of the reference data.

Accordingly, in a data processing method in accordance with the data processing apparatus of the present invention, the operation executing means conducts data reading of the predetermined processing data which is written in advance as a data in the data storing means for rewritably conducting data storage of various kinds of data, and executes the predetermined operation. Although the predetermined reference data is written in advance as a data in the reference storing means, the holding characteristic of a stored data in this reference storing means is not better than that of the data storing means. And, the quality determining means conducts data reading of the reference data from this reference storing means, and determines whether or not there is inferiority, and thereby, if the quality determining means determines inferiority of the reference data, the error detecting means detects error occurrence. Accordingly, storage inferiority becomes to occur in the reference storing means before storage inferiority occurs in the data storing means, and error occurrence is detected when storage inferiority occurs in this reference storing means.

In the above-mentioned data processing apparatus, the above-described reference storing means can conduct data storage of a series of two-values data as the reference data, in which two-values bits are arranged at predetermined locations, and the above-described quality determining means can compare the two-values bits at a plurality of locations of the above-described two-values data with each other, and can determine quality of the above-described reference data.

In this case, since the reference storing means conducts data storage of a series of two-values data as the reference data, in which two-values bits are arranged at predetermined locations, and the quality determining means compares the two-values bits at a plurality of locations of the two-values data with each other and determines quality of the reference data, when two two-values bits of "0, 1" which are stored in the reference storing means as a data are changed to "0,0" or "1,1" due to storage inferiority for example, this is determined by the quality determining means as inferiority of the reference data.

In the above-mentioned data processing apparatus, the above-described reference storing means conducts data storage of a series of two-values data as the reference data, in which two-values bits of "0" and "1" are arranged at predetermined locations at least one by one, and the above-described quality determining means can confirm that the two-values bits at at least two predetermined locations of the above-described two-values data are opposite to each other.

In this case, since, with regard to a series of two-values data which is stored in the reference storing means as the reference data, the two-values bits of "0" and "1" are arranged at the predetermined locations at least one by one, and the quality determining means confirms that the two-values bits at at least two predetermined locations of this two-values data are opposite to each other, when two two-values bits of "0, 1" of two-value data are changed to "0,0" or "1,1" due to storage inferiority, this is determined by the quality determining means as inferiority of the reference data.

In the above-mentioned data processing apparatus, the above-described quality determining means includes data holding means for conducting data reading of the reference data from the above-described reference storing means, and temporarily holding it, and data comparison means for conducting data comparison between the reference data temporarily stored in the above-described data holding means and the reference data stored in the above-described reference storing means as a data.

In this case, the data holding means conducts data reading of the reference data from the reference storing means, and temporarily holds it, and the data comparison means conducts data comparison between the reference data temporarily held in this data holding means and the reference data stored in the reference storing means as a data. Accordingly, when the reference data in the reference storing means varies, since this becomes to be different from the reference data which is held in the data holding means just before, it is determined by the data comparison means as inferiority of the reference data.

In the above-mentioned data processing apparatus, the above-described quality determining means includes comparison storing means formed by a non-volatile information storage medium, in which data writing of a comparison data having contents same as the above-described reference data is conducted in advance, and data comparison means for conducting data reading of the comparison data from the above-described comparison storing means and conducting data reading of the reference data from the above-described reference storing means, and conducting data comparison.

In this case, since the comparison data having contents same as the reference data is written as a data in advance in the comparison storing means formed by a non-volatile information storage medium, and the data comparison means conducts data reading of the comparison data of this comparison storing means and the reference data of the reference storing means, and conducts data comparison, in this manner, quality of the reference data of the reference storing means is determined by the quality determining means.

Yet other data processing apparatus of the present invention includes data storing means formed of an information storage medium for rewritably conducting data storage of various kinds of data, in which data writing of a predetermined processing data is conducted in advance, operation executing means for conducting data reading of the processing data from the above-described data storing means, and executing a predetermined operation, data holding means for conducting data reading of the processing data from the above-described data storing means, and temporarily holding it, data comparison means for conducting data comparison between the processing data temporarily stored in the above-described data holding means and the processing data stored in the above-described data storing means as a data, and error detecting means for detecting error occurrence if the above-described data comparison means determines non-coincidence between the processing data.

Accordingly, in a data processing method in accordance with the data processing apparatus of the present invention, the operation executing means conducts data reading of the predetermined processing data which is written in advance as a data in the data storing means for rewritably conducting data storage of various kinds of data, and executes the predetermined operation. However, the data holding means conducts data reading of the processing data of the data storing means, and temporarily holds it, and the data comparison means conducts data comparison between the processing data temporarily held in this data holding means and the processing data of the data storing means. Since the error detecting means detects error occurrence when non-coincidence between the processing data is determined by this data comparison means, storage inferiority which occurs in the data storing means is detected as error occurrence.

In addition, the various kinds of means recited in the present invention may be formed so as to realize their functions, and for example, an exclusive hardware, a computer in which a proper function is provided by means of a program, a function which is realized inside a computer by means of a proper program, a combination thereof and so forth are acceptable.

### BRIEF DESCRIPTION OF THE INVENTION

This and other objects, features, and advantages of the present invention will become more apparent upon a reading of the following detailed description and drawings, in which:
Fig. 1 is a block diagram showing an essential part of a data processing apparatus of the first embodiment of the present invention;
Fig. 2 is a circuit diagram showing an internal arrangement of a data comparison circuit corresponding to data comparison means;
Fig. 3 is a time chart showing a processing operation of the data comparison circuit corresponding to the data comparison means;
Fig. 4A is an illustrative cross sectional view showing a thin film arrangement of a storage cell of a register circuit that is data storing means in a data processing apparatus of one modified example and a reference register that is reference storing means in the apparatus;
Fig. 4B is an illustrative cross sectional view showing a thin film arrangement of a storage cell of a register circuit that is data storing means in a data processing apparatus of one modified example and a reference register that is reference storing means in the apparatus;
Fig. 5 is a flowchart showing a data processing method in other modified example;
Fig. 6 is a block diagram showing an essential part of a data processing apparatus of this embodiment;
Fig. 7 is a circuit diagram showing a quality determining circuit that is quality determining means;
Fig. 8 is a time chart showing a processing operation of the quality determining circuit;
Fig. 9 is a circuit diagram showing a quality determining circuit in a data processing apparatus of yet other modified example;
Fig. 10 is a time chart showing a processing operation of the quality determining circuit and
Fig. 11 is a block diagram showing an internal arrangement of a data processing apparatus of one conventional example.

### DESCRIPTION OF THE EMBODIMENTS

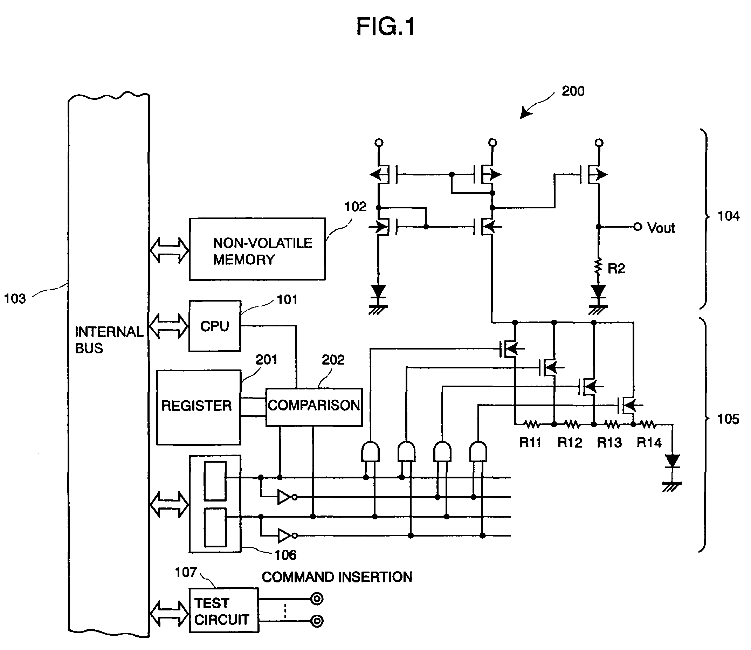

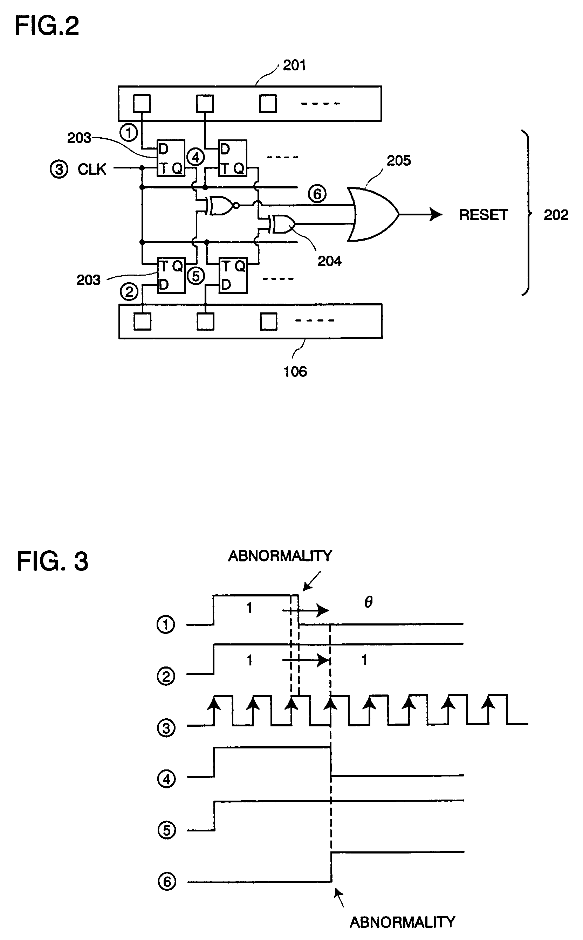

A data processing apparatus of the first embodiment of the present invention will be explained by referring to Fig. 1 to Fig. 3. In addition, Fig. 1 is a block diagram showing an essential part of the data processing apparatus of this first embodiment, Fig. 2 is a circuit diagram showing an internal arrangement of a data comparison circuit corresponding to data comparison means, and Fig. 3 is a time chart showing a processing operation of the data comparison circuit corresponding to the data comparison means.

Same as the data processing apparatus 100 mentioned above as one conventional example, a data processing apparatus 200 of this embodiment is also formed as a part of a microcomputer consisted of a semiconductor integrated circuit, and as shown in Fig. 1, a CPU 101 and a non-volatile memory 102 are connected to an internal bus 103.

A register circuit 106 that is data storing means, and a test circuit 107 are also connected to this control bus 103, and a band gap circuit 104 that is an analog circuit is connected to the register circuit 106 through a trimming circuit 105 corresponding to operation executing means.

However, different from the data processing apparatus 100 of one conventional example, in the data processing apparatus 200 of this embodiment, a reference register 201 that is reference storing means, and a data comparison circuit 202 that is data comparison means are added, and the register circuit 106 and the reference register 201 are connected to this data comparison circuit 202.

The reference register 201 is formed of an FF array having an arrangement same as the register circuit 106, and a reference data having contents same as a processing data which is stored in the register circuit 106 as a data is written therein as a data in advance. As shown in Fig. 2, the data comparison circuit 202 is formed of a D type FF 203, an ExOR gate 204, an OR gate 205 and so forth, and conducts data comparison between the reference data of the reference register 201 and the processing data of the register circuit 106 at a signal period of a reference clock.

This data comparison circuit 202 is also connected to the CPU 101, and this CPU 101 functions as error detecting means by means of data processing corresponding to a control program which is mounted as a software in advance in a ROM and so forth outside the data processing apparatus 200.

In other words, in case that the data comparison circuit 202 determines coincidence as a comparison result between the reference data and the processing data, the CPU 101 continues a usual processing operation same as conventional, and however, if the data comparison circuit 202 determines non-coincidence, the CPU 101 detects error occurrence, and executes a system reset and forcedly stops an operation of each section of the data processing apparatus 200.

In the above-mentioned arrangement, same as the data processing apparatus 100 mentioned above as one conventional example, the data processing apparatus 200 of this embodiment also generates an output voltage of a predetermined value by means of the band gap circuit 104 that is an analog circuit and utilizes it for various kinds, and the trimming circuit 105 adjusts an operation characteristic of this band gap circuit 104 in accordance with the processing data of the register circuit 106.

Although the data processing apparatus 200 of this embodiment is also shipped for a user side after a processing data is written in the register circuit 106 as a data on a maker side, storage inferiority sometimes occurs in the register circuit 106 due to various kinds of causes. However, in the data processing apparatus 200 of this embodiment, since a whole operation is forcedly stopped automatically when storage inferiority occurs in the register circuit 106, it is possible to prevent an erroneous operation or runaway of the microcomputer.

In other words, different from the data processing apparatus 100 of one conventional example, in the data processing apparatus 200 of this embodiment, a reference data same as a processing data of the register circuit 106 is stored in the reference register 201 as a data, and the reference data of this reference register 201 and the processing data of the register circuit 106 are compared with each other by the data comparison circuit 202 at a signal period of a reference clock.

Since, when a stored data of the register circuit 106 is normal, the data comparison circuit 202 determines coincidence as a comparison result, the CPU 101 continues a usual processing operation under such condition. However, since, when inferiority occurs in the stored data of the register circuit 106, the data comparison circuit 202 determines non-coincidence as a comparison result, the CPU 101 promptly detects error occurrence, and executes a system reset.

In this system reset, since an operation of each section of the data processing apparatus 200 is forcedly stopped, the data processing apparatus 200 does not operate under condition that a voltage value of an output voltage from the band gap circuit 104 is abnormal due to storage inferiority of a processing data of the register circuit 106.

Accordingly, in the data processing apparatus 200 of this embodiment, it is possible to prevent an erroneous operation or runaway of a microcomputer due to storage inferiority of the register circuit 106, and it is also possible to prevent an electronic instrument in which the microcomputer is utilized from falling into fatal condition.

In addition, as mentioned above, as a method of conducting data writing of a reference data in the reference register 201, which is the same as a processing data of the register circuit 106, when data writing of a processing data in the register circuit 106 from the test circuit 107 is conducted by an LSI test device, data writing of the same reference data in the reference register 201 may be conducted.

In addition, the present invention is not limited to the above-described embodiment, and various kinds of modifications are acceptable within a scope thereof. For example, it is supposed in the above-described embodiment to form the reference register 201 as completely the same arrangement as the register circuit 106, and in this arrangement, holding characteristics of a stored data between the register circuit 106 and the reference register 201 also become to be the same.

In this case, there is a possibility that stored data in the register circuit 106 and the reference register 201 concurrently disappear, and comparison results thereof becomes to be the same, and error occurrence is not detected in spite of the disappearance of the stored data in the register circuit 106, although the possibility is actually low.

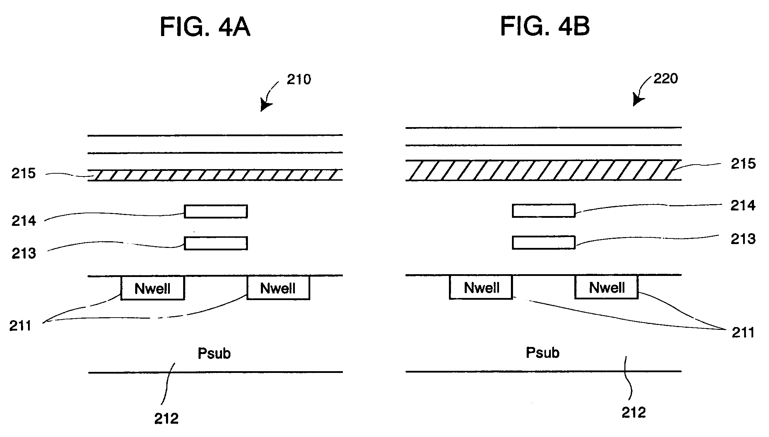

Accordingly, in case that this becomes to be a task, it is preferable that arrangements of the reference register 201 and the register circuit 106 are not made to be completely the same, and that holding characteristics of a stored data in the register circuit 106 and the reference register 201 are made to be different from each other. For example, as mentioned above, in case that the register circuit 106 is formed of an FF array, as shown in Fig. 4A, in a storage cell 210 thereof, an FG (Floating Gate) 213 and a CG (Control Gate) 214 are formed on a p type region 212 in which n wells 211 are formed, and an arrangement is formed, in which a metal layer 215 made of aluminum is positioned above those.

In the register circuit 106 having such a arrangement, since a holding characteristic of the stored data varies in accordance with a layer thickness of the metal layer 215, as shown in Fig. 4B, for example, in a storage cell 220 of the reference register 201, a layer thickness of the metal layer 215 is made to be greater than that of the storage cell 210 of the register circuit 106.

In this case, since the holding characteristic of the reference register 201 becomes to be better than that of the register circuit 106, storage inferiority does not occur in the reference register 201 when storage inferiority occurs in the register circuit 106, and it becomes to be possible to promptly determine that the storage inferiority occurs in the register circuit 106.

Also, although, in the above-described embodiment, it is shown as an example that the data comparison circuit 202 formed of a hardware is connected to the register circuit 106 and the reference register 201 to compare the processing data with the reference data, it is also possible to compare the processing data of the register circuit 106 with the reference data of the reference register 201 by predetermined processing by means of a software of the CPU 101.

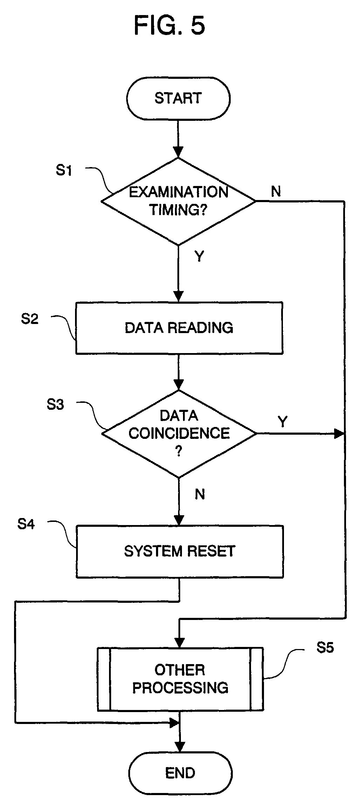

In that case, as shown in Fig. 5, in the CPU 101, during execution of a usual processing operation (STEP S5), examination timing is generated at a predetermined period (STEP S1). Every time this examination timing occurs, the CPU 101 conducts data reading of stored data in the register circuit 106 and the reference register 201, and compares the data with each other (STEP S2 and S3), and in case that comparison results thereof coincide with each other, it returns to the usual processing operation (STEP S5), and in case that the comparison results do not coincide with each other, a system reset can be executed (STEP S4).

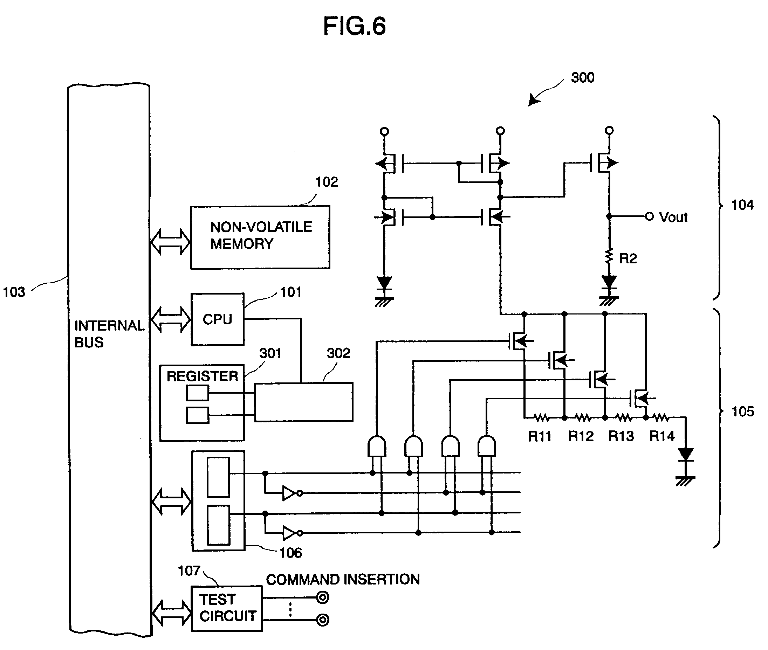

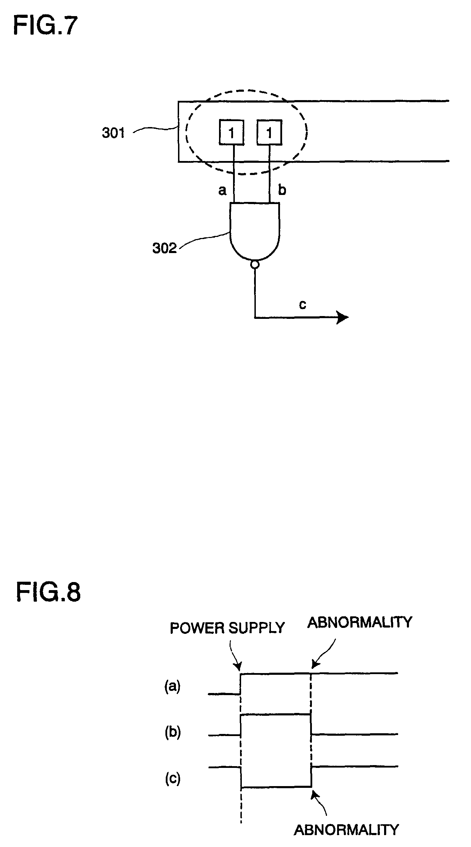

Next, a data processing apparatus of the second embodiment of the present invention will be explained below by referring to Fig. 6 to Fig. 8. In addition, with regard to the data processing apparatus of this second embodiment, for components same as those of the data processing apparatus of the first embodiment, the same names and symbols are utilized and detailed explanation will be omitted. Also, Fig. 6 is a block diagram showing an essential part of the data processing apparatus of this embodiment, Fig. 7 is a circuit diagram showing a quality determining circuit that is quality determining means, and Fig. 8 is a time chart showing a processing operation of the quality determining circuit.

In the data processing apparatus 300 of this embodiment, as shown in Fig. 6, a reference register 301 that is reference storing means is connected to a quality determining circuit 302 that is quality determining means, and however, a register circuit 106 is not connected to this quality determining circuit 302.

Although the reference register 301 is still formed of an FF array having an arrangement same as the register circuit 106, since, in a storage cell thereof, a layer thickness of a metal layer is made to be smaller, a holding characteristic of a stored data in the reference register 301 is not better than that of the register circuit 106.

And, in this reference register 301, a predetermined reference data is written in advance as a data, and the quality determining circuit 302 conducts data reading of the reference data from the reference register 301, and determines whether or not there is inferiority. More particularly, the reference data which is stored in the reference register 301 as a data is set independent of a processing data in the register circuit 106, and as shown in Fig. 7, here it is formed of "1, 1" of a series of two-values data in which two-value bits are arranged at predetermined locations.

The quality determining circuit 302 is formed of a NAND gate, and as shown in Fig. 8, it compares the two-values bits "1, 1" at a plurality of locations of the two-values data with each other, and when this does not coincide with each other, it determines storage inferiority of the reference data. Since this quality determining circuit 302 is also connected to the CPU 101 and so forth, when the quality determining circuit 302 determines non-coincidence, this CPU 101 detects error occurrence as error detecting means, and executes a system reset and forcedly stops an operation of each section of the data processing apparatus 300.

In the above-mentioned arrangement, same as the data processing apparatus 200 of the above-mentioned first embodiment, in the data processing apparatus 300 of this embodiment, a trimming circuit 105 adjusts an operation characteristic of a band gap circuit 104 for generating an output voltage of a predetermined value as an analog circuit, in accordance with the processing data of the register circuit 106, and the processing data of this register circuit 106 is written as a data on a maker side.

And, although storage inferiority still occurs in the register circuit 106, in the data processing apparatus 300 of this embodiment, a whole operation is forcedly stopped automatically before storage inferiority occurs in the register circuit 106. In other words, in the data processing apparatus 300 of this embodiment, a predetermined reference data is written in the reference register 301 as a data, which has an arrangement same as the register circuit 106 and of which holding characteristic of a stored data is inferior to the register circuit, and quality of the reference data in this reference register 301 is always confirmed by the quality determining circuit 302.

Since, when the reference data in the reference register 301 is normal, the quality determining circuit 302 does not determine storage inferiority, the CPU 101 continues a usual processing operation under such condition. However, since, when inferiority occurs in the reference data of the reference register 301, the quality determining circuit 302 determines storage inferiority, the CPU 101 promptly detects error occurrence, and executes a system reset.

Since, as mentioned above, the reference register 301 and the register circuit 106 are formed so as to have the same arrangement, age-based deterioration of data storage occurs in the reference register 301 like in the register circuit 106, and however, a holding characteristic of a stored data of the reference register 301 is not better than that of the register circuit 106.

Accordingly, since storage inferiority becomes to occur in the reference register 301 before storage inferiority occurs in the register circuit 106, and since, when the storage inferiority of this reference register 301 occurs, an operation of each section of the data processing apparatus 300 is forcedly stopped, an erroneous operation or runaway due to the storage inferiority of the register circuit 106 is prevented.

In addition, the present invention is not limited to the above-described embodiment, and various kinds of modifications are acceptable within a scope thereof. For example, although it is shown in the above-described embodiment that two two-values bits "1, 1" are written in the reference register 301 as a series of two-values data that become to be a reference data, and coincidence thereof is confirmed by the quality determining circuit 302 formed of an NAND gate, it is possible to set the reference data of the reference register 301 to "1, 0" or "0, 1", and to confirm non-coincidence by the quality determining circuit 302 formed of an ExOR gate.

In this case, even though the two two-values bits of the two-values data "0, 1" that become to be a reference data are changed to "0, 0" or "1, 1" due to storage inferiority, this is determined as inferiority of the reference data by the quality determining circuit 302, and storage inferiority of the reference register 301 is confirmed.

Also, although it is shown in the above-described embodiment that a series of two-values data that become to be the reference data of the reference register 301 is logically calculated by the quality determining circuit 302 formed of a logic gate to determine whether or not there is storage inferiority, as mentioned above, the reference data of the reference register 301 can be set independent of the processing data of the register circuit 106.

Accordingly, it is also possible to set a reference data of the reference register 301 as predetermined two-values data such as "1, 0, 1, 0,···, 1, 0", and to write in advance a comparison data same as that in comparison storage means different from the reference register 301, and to confirm coincidence between these reference data and comparison data by means of hardware processing of the data comparison circuit 202 or software processing of the CPU 101.

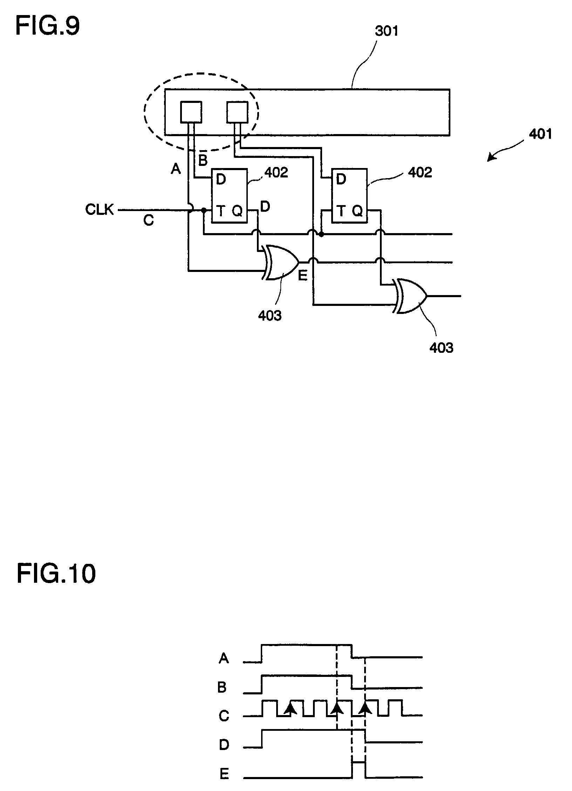

Furthermore, as shown in Fig. 9, it is also possible to form a quality determining circuit 401 that is quality determining means by a D type FF 402 that becomes to be data holding means or by an ExOR gate 403 that becomes to be data comparison means. In this case, as shown in Fig. 10, the D type FF 402 reads out two-values bits that are reference data of the reference register 301 at a signal period of a reference clock, and temporarily holds them, and the ExOR gate 403 compares the reference data temporarily held in this D type FF 402 with the reference data stored in the reference register 301 as a data at a signal period of a reference click.

However, since execution timing of this data comparison is delayed by one period of the reference clock compared with temporal holding, when the reference data stored in the reference register 301 as a data is changed, this is detected as a difference from the reference data temporarily held in the D type FF 402.

In addition, since, as long as the above-mentioned quality determining circuit 401 is continuously driven, a data change can be certainly detected, it is also possible to directly detect a change of a processing data by connecting this quality determining circuit 401 not to the reference register 301 but to the register circuit 106, for example.

Since the present invention is constructed as explained above, it effects advantages described below.

In the data processing method in accordance with one data processing apparatus of the present invention, the operation executing means conducts data reading of the predetermined processing data which is written in advance as a data in the data storing means for rewritably conducting data storage of various kinds of data, and executes a predetermined operation, and the reference data having contents same as the processing data is written in advance as a data in the reference storing means, and the data comparison means conducts data reading of the reference data of this reference storing means and the processing data of the data storing means, and conducts data comparison, and thus, the error detecting means detects error occurrence when non-coincidence between the reference data and the processing data is determined, and thereby, storage inferiority which occurs in the data storing means can be detected as error occurrence, and for example, it is possible to forcedly stop an processing operation of the data processing apparatus when storage inferiority occurs in the data storing means.

Also, in the above-mentioned data processing apparatus, holding characteristics of a stored data between the reference storing means and the data storing means are different from each other, and thereby, since it is possible to reduce a possibility that the processing data of the data storing means and the reference data of the reference storing means are concurrently and similarly changed, it is possible to improve a detection accuracy of storage inferiority of the data storing means.

In the data processing method in accordance with other data processing apparatus of the present invention, the operation executing means conducts data reading of the predetermined processing data which is written in advance as a data in the data storing means for rewritably conducting data storage of various kinds of data, and executes a predetermined operation, and although the predetermined reference data is written in advance as a data in the reference storing means, the holding characteristic of a stored data in this reference storing means is not better than that of the data storing means, and the quality determining means conducts data reading of the reference data from this reference storing means, and determines whether or not there is inferiority, and thus, if the quality determining means determines inferiority of the reference data, the error detecting means detects error occurrence, and thereby, since storage inferiority occurs in the reference storing means before storage inferiority occurs in the data storing means, it is possible to detect error occurrence when the storage inferiority occurs in this reference storing means, and for example, it is possible to forcedly stop an processing operation of the data processing apparatus just before storage inferiority occurs in the data storing means.

Also, in the above-mentioned data processing apparatus, the reference storing means conducts data storage of a series of two-values data as the reference data, in which two-values bits are arranged at predetermined locations, and the quality determining means compares the two-values bits at a plurality of locations of the two-values data with each other, and determines quality of the reference data, and thereby, for example, it is possible to simply and favorably determine inferiority of the reference data as a change of predetermined two-values bits.

Also, in a series of two-values data stored in the reference storing means as the reference data, two-values bits of "0" and "1" are arranged at predetermined locations at least one by one, and the quality determining means confirms that the two-values bits at at least two predetermined locations of these two-values data are opposite to each other, and thereby, when the two two-values bits of the two-values data "0, 1" are changed to "0, 0" or "1, 1" due to storage inferiority, since this is determined as inferiority of the reference data by the quality determining means, it is possible to simply and certainly determine inferiority occurrence in the reference data.

Also, the data holding means conducts data reading of the reference data from the reference storing means, and temporarily holds it, and the data comparison means conducts data comparison between the reference data temporarily held in this data holding means and the reference data stored in the reference storing means as a data, and thereby, when the reference data in the reference storing means varies, since this is different from the reference data which is held in the data holding means just before, and since it is determined by the data comparison means as inferiority of the reference data, it is possible to simply and certainly determine inferiority occurrence in the reference data.

Also, the comparison data having contents same as the reference data is written as a data in advance in the comparison storing means formed by a non-volatile information storage medium, and the data comparison means conducts data reading of the comparison data of this comparison storing means and the reference data of the reference storing means, and conducts data comparison, and thereby, since quality of the reference data of the reference storing means is determined by the quality determining means, it is possible to simply and certainly determine inferiority occurrence in the reference data.

In the data processing method in accordance with yet other data processing apparatus of the present invention, the operation executing means conducts data reading of the predetermined processing data which is written in advance as a data in the data storing means for rewritably conducting data storage of various kinds of data, and executes a predetermined operation, and the data holding means conducts data reading of the processing data of the data storing means, and temporarily holds it, and the data comparison means conducts data comparison between the processing data temporarily held in this data holding means and the processing data of the data storing means, and the error detecting means detects error occurrence when non-coincidence between the processing data is determined by this data comparison means, and thereby, storage inferiority which occurs in the data storing means can be detected as error occurrence, and for example, it is possible to forcedly stop an processing operation of the data processing apparatus when storage inferiority occurs in the data storing means.

## Claims

1. A data processing apparatus comprising:
data storing means formed of an information storage medium for rewritably conducting data storage of various kinds of data, in which data writing of a predetermined processing data is conducted in advance;
operation executing means for conducting data reading of the processing data from said data storing means, and executing a predetermined operation;
reference storing means in which data writing of a reference data having contents same as said processing data is conducted in advance;
data comparison means for conducting data reading of the reference data from said reference storing means and conducting data reading of the processing data from said data storing means, and conducting data comparison; and
error detecting means for detecting error occurrence if said data comparison means determines non-coincidence between the reference data and the processing data.

2. A data processing apparatus according to claim 1,
wherein said reference storing means is formed of an information storage medium, of which holding characteristic of a stored data is different from that of said data storing means.

3. A data processing apparatus comprising:
data storing means formed of an information storage medium for rewritably conducting data storage of various kinds of data, in which data writing of a predetermined processing data is conducted in advance;
operation executing means for conducting data reading of the processing data from said data storing means, and executing a predetermined operation;
reference storing means formed of an information storage medium, of which holding characteristic of a stored data is different from that of said data storing means, in which data writing of a reference data having contents same as said processing data is conducted in advance;
data comparison means for conducting data reading of the reference data from said reference storing means and conducting data reading of the processing data from said data storing means, and conducting data comparison; and
error detecting means for detecting error occurrence if said data comparison means determines non-coincidence between the reference data and the processing data.

4. A data processing apparatus comprising:
data storing means formed of an information storage medium for rewritably conducting data storage of various kinds of data, in which data writing of a predetermined processing data is conducted in advance;
operation executing means for conducting data reading of the processing data from said data storing means, and executing a predetermined operation;
reference storing means formed of an information storage medium of which holding characteristic of a stored data is not better than said data storing means, in which data writing of a predetermined reference data is conducted in advance;
quality determining means for conducting data reading of the reference data from said reference storing means, and determining whether or not there is inferiority; and
error detecting means for detecting error occurrence if said quality determining means determines inferiority of the reference data.

5. A data processing apparatus according to claim 4,
wherein said reference storing means conducts data storage of a series of two-values data as the reference data, in which two-values bits are arranged at predetermined locations, and
said quality determining means compares the two-values bits at a plurality of locations of said two-values data with each other, and determines quality of said reference data.

6. A data processing apparatus according to claim 5,
wherein said reference storing means conducts data storage of a series of two-values data as the reference data, in which two-values bits of "0" and "1" are arranged at predetermined locations at least one by one, and
said quality determining means confirms that the two-value bits at at least two predetermined locations of said two-value data are opposite to each other.

7. A data processing apparatus according to claim 4,
wherein said quality determining means comprises:
data holding means for conducting data reading of the reference data from said reference storing means, and temporarily holding it; and
data comparison means for conducting data comparison between the reference data temporarily held in said data holding means and the reference data stored in said reference storing means as a data.

8. A data processing apparatus according to claims 4,
wherein said quality determining means comprises:
comparison storing means formed by a non-volatile information storage medium, in which data writing of a comparison data having contents same as said reference data is conducted in advance; and
data comparison means for conducting data reading of the comparison data from said comparison storing means and conducting data reading of the reference data from said reference storing means, and conducting data comparison.

9. A data processing apparatus comprising:
data storing means formed of an information storage medium for rewritably conducting data storage of various kinds of data, in which data writing of a predetermined processing data is conducted in advance;
operation executing means for conducting data reading of the processing data from said data storing means, and executing a predetermined operation;
reference storing means formed of an information storage medium of which holding characteristic of a stored data is not better than said data storing means, for conducting data storage of a series of two-values data as the reference data, in which two-values bits of "0" and "1" are arranged at predetermined locations at least one by one;
quality determining means for confirming that the two-value bits at at least two predetermined locations of said two-value data are opposite to each other; and
error detecting means for detecting error occurrence if said quality determining means determines inferiority of the reference data.

10. A data processing apparatus according to claim 9,
wherein said quality determining means comprises:
data holding means for conducting data reading of the reference data from said reference storing means, and temporarily holding it; and
data comparison means for conducting data comparison between the reference data temporarily held in said data holding means and the reference data stored in said reference storing means as a data.

11. A data processing apparatus according to claims 9,
wherein said quality determining means comprises:
comparison storing means formed by a non-volatile information storage medium, in which data writing of a comparison data having contents same as said reference data is conducted in advance; and
data comparison means for conducting data reading of the comparison data from said comparison storing means and conducting data reading of the reference data from said reference storing means, and conducting data comparison.

12. A data processing apparatus comprising:
data storing means formed of an information storage medium for rewritably conducting data storage of various kinds of data, in which data writing of a predetermined processing data is conducted in advance;
operation executing means for conducting data reading of the processing data from said data storing means, and executing a predetermined operation;
data holding means for conducting data reading of the processing data from said data storing means, and temporarily holding it;
data comparison means for conducting data comparison between the processing data temporarily held in said data holding means and the processing data stored in said data storing means as a data; and
error detecting means for detecting error occurrence if said data comparison means determines non-coincidence between the processing data.

13. A data processing method of a data processing apparatus having data storing means formed of an information storage medium for rewritably conducting data storage of various kinds of data, in which data writing of a predetermined processing data is conducted in advance, and operation executing means for conducting data reading of the processing data from said data storing means, and executing a predetermined operation, the method comprising the steps of:
conducting data writing of a reference data having contents same as said processing data in advance in an information storage medium that is different from said data storing means;
conducting data reading of this reference data and conduct data reading of the processing data from said data storing means, and conduct data comparison; and
detecting error occurrence if the reference data and the processing data to which this data comparison is applied do not coincide with each other.

14. A data processing method of a data processing apparatus having data storing means formed of an information storage medium for rewritably conducting data storage of various kinds of data, in which data writing of a predetermined processing data is conducted in advance, and operation executing means for conducting data reading of the processing data from said data storing means, and executing a predetermined operation, the method comprising the steps of:
conducting data writing of a predetermined reference data in advance in an information storage medium, of which holding characteristic of a stored data is not better than said data storing means;
conducting data reading of this reference data, and determine whether there is inferiority; and
detecting error occurrence if inferiority of the reference data is determined thereby.

15. A data processing method of a data processing apparatus having data storing means formed of an information storage medium for rewritably conducting data storage of various kinds of data, in which data writing of a predetermined processing data is conducted in advance, and operation executing means for conducting data reading of the processing data from said data storing means, and executing a predetermined operation, the method comprising the steps of:
conducting data reading of the processing data from said data storing means, and temporarily hold it;
conducting data comparison between this temporarily stored processing data and the processing data stored in said data storing means as a data; and
detecting error occurrence if non-coincidence between the processing data is determined thereby.
